# EUROPEAN PATENT APPLICATION

(11) **EP 4 322 473 A1**
(43) Date of publication of application: **14.02.2024**
(21) Application number: 22190157.2
(22) Date of filing: 12.08.2022
(51) Int. Cl.: H04L 9/40, H04W 12/041, H04W 12/37

(54) **METHOD FOR USER EQUIPMENT, METHOD FOR BACKEND, APPARATUS AND COMPUTER PROGRAM**

(71) Applicant: Bayerische Motoren Werke Aktiengesellschaft, 80809 München (DE)
(72) Inventor: Knott, Thorsten, 83104 Tuntenhausen (DE)

(57) **Abstract**

Embodiments relate to a method 100 for user equipment. The method comprises receiving 110 data indicative of a usage of a digital key from a communication device and storing 120 the data in a secured storage device of the user equipment.

## Description

The present disclosure relates to the field of digital identity authorization. Embodiments relate to a method for user equipment, method for a backend an apparatus and a computer program.

Authorization processes enable a user of a device to enable certain functionalities with his device, e.g., validate a generation of a digital key, unlock a vehicle, start an engine of a vehicle. For example, the use of a digital key enables a user of a vehicle to open it particularly easily, also called smart access. In particular, smart access can be used to configure user equipment (UE) to act as a digital key for a vehicle. For this purpose, an invitation for a digital key, also called a data key, can be passed on to a friend device, e.g., a further user equipment, by the user equipment for configuration of the friend device. This allows the friend device to be configured/authenticated in such a way that access, for example opening, starting, etc. of the vehicle is enabled via wireless communication, for example via Bluetooth or ultra-wideband (UWB) technology.

The Digital Car Key solution currently defined in the Car Connectivity Consortium's (CCC) standard release 3 (v1.1, June 2022) standardizes an access system consisting of,
a) user equipment, with internet connectivity that
   i) carry a digital key embedded in secure storage on the user equipment;
   ii) offer interfaces from the secure storage to the user equipment operating system; and
   iii) offer interfaces from the user equipment operating system to other applications running on the user equipment (e.g. a vehicle original equipment manufacturer (OEM) app)
b) a vehicle, allowing carriers of a digital key to operate certain vehicle functionality
c) backend systems, interconnecting smart devices and vehicles allowing to share and manage digital keys and offer additional services.

Before digital keys are usable in a car, they are registered at a "Key Tracking Server". This ensures that the existence of all digital keys is known at the point of interest in time (e.g., an insurance investigation). For example, in case of a vehicle theft an insurance may request specific data about usage of digital keys to investigate an insurance claim. However, a registration process at the Key Tracking Server may be resource and/or time intensive. Thus, there may be a need to improve key tracking data collection of digital keys.

It is therefore a finding that a key tracking data collection of digital keys can be improved by storing data in a secured storage device of user equipment. This way, kay tracking data collection can be performed if needed, e.g., if an insurance investigation is necessary. For example, the stored data may be transmitted to an insurance company on request. Further, by storing the data of usage in the UE a communication link between the vehicle and a backend for key tracking data collection can be omitted during a digital key generation process. A data transfer can be performed later when a communication link can be established. Thus, a digital key can be generated even if the vehicle and/or the UE is offline, e.g., not connected to a base station.

Examples provide a method for user equipment, comprising receiving data indicative of a usage of a digital key from a communication device and storing the data in a secured storage device of the user equipment. This way, a digital key can be used, e.g., to generate a further digital key, without a need to establish a communication link of the vehicle to a backend, e.g., the Key tracking server. Thus, a communication link, e.g., to a base station can be omitted for the key usage. Further, a key tracking data collection of digital keys can be performed (later) if needed, e.g., if the vehicle was stolen, since the data is stored in the secured storage device on the UE.

In an example, the usage may be indicative of a generation of another digital key by using the digital key. This way, a digital key can be generated without the need of a connection link between the communication device or the UE and a backend, e.g., by use of a base station.

In an example, the method may further comprise blocking a deletion of at least one of the data or the digital key until the data has been transmitted to a backend. This way, it can be ensured that the stored data and/or the digital key cannot be deleted until a transmission to the backend, e.g., a server, has been performed, e.g., to track data collection of the digital keys of the vehicle.

In an example, the method may further comprise transmitting the data in dependence on deleting at least one of the data or the digital key. This way, the stored data can be automatically transmitted to the backend if a user of the UE tries to delete the data and/or the digital key.

In an example, the method may further comprise receiving a synchronization request from a backend and transmitting the data stored in the storage device to the backend. This way, the backend, e.g., a server, can request needed data for a data collection of the digital keys of the vehicle.

In an example, the data is encrypted such that the data can only be decrypted by a backend. This way, a manipulation of the stored data by a user of the UE can be prevented.

Examples provide a method for a communication device, comprising generating data indicative of a usage of a digital key of a user equipment and transmitting the data to the user equipment. This way, the communication device, e.g., comprised by a vehicle, can transmit data to be stored to the UE and may enable the UE certain functionalities of the communication device and/or vehicle. For example, the communication device may generate a new digital key for usage of a vehicle and may store information about this process in the UE. This way, the UE may act as secured storage device for a later data collection of digital keys of the vehicle, e.g., by a backend.

Examples provide a method for a backend, comprising receiving, from a user equipment, data indicative of a usage of a digital key. This way, the backend, e.g., a Key Tracking Server, can receive from the UE needed data for a tracking data collection of digital keys.

Examples relate to an apparatus, comprising interface circuitry configured to with at least one of a communication device, user equipment or backend and processing circuitry configured to perform a method as described above.

Examples relate to a vehicle, comprising an apparatus as described above and a sensor for measuring sensor data.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which
Fig. 1 shows an example of a method for user equipment;
Fig. 2 shows an example of a method for a communication device
Fig. 3 shows an example of a method for a backend; and
Fig. 4 shows a block diagram of an example of an apparatus.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

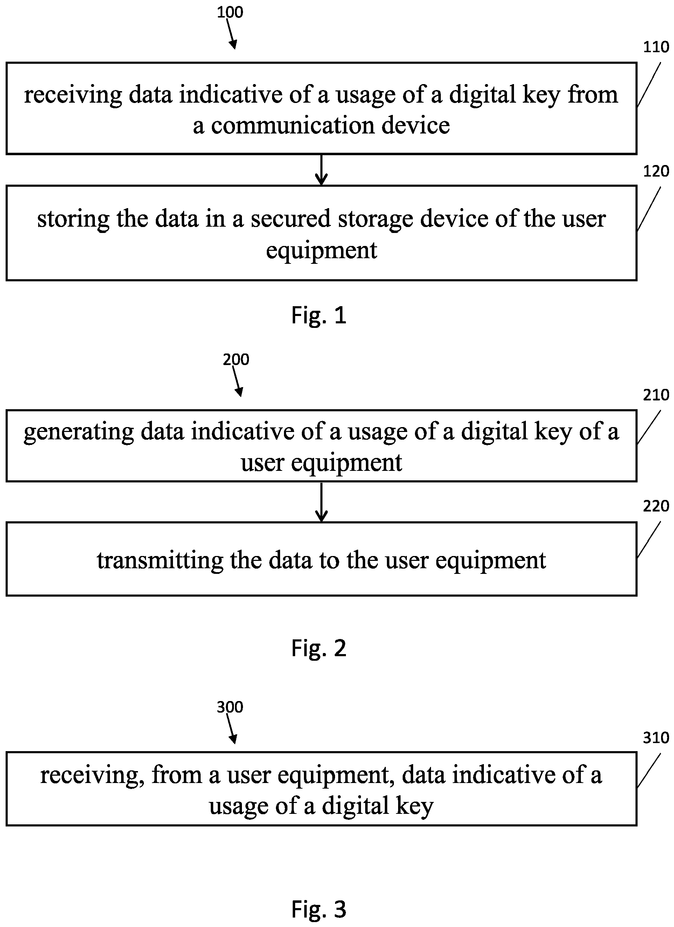

Fig. 1 shows an example of a method 100 for user equipment. The method comprises receiving 110 data indicative of a usage of a digital key from a communication device and storing 120 the data in a secured storage device of the user equipment. This way, data correlated to a digital key could be stored in a secured storage device of the UE. For example, the data could be stored in a private mailbox or a secure element. The data may comprise needed information to supervise a usage of a digital key of a vehicle. For example, the data may be indicative of a use of a digital key, e.g., to lock or unlock a vehicle, a generation of a new digital key using an existing digital key, a time of usage of the digital key, a position of the use of the digital key. Thus, by use of the data stored on the UE, usage data required by a third party, e.g., an insurance, can be provided. The digital key for whose use the data is indicative can be stored on the UE.

For example, the usage data required by an insurance may be stored on the UE, e.g., in the private mailbox of the UE (e.g., in a trusted execution environment of the UE). The data of the usage of the digital key (e.g., a timestamp, a position) may be transmitted to the UE carrying the digital key used.

For example, an exchange command, e.g., as defined in [1], can be utilized to transmit the data from the communication device to the UE.

The data is stored in the secured storage device, e.g., a private mailbox of the UE, issuing and/or carrying the digital key. The digital key can be already registered at a backend, e.g., a key tracking server. The data may be stored according to the exchange command defined in [1].

The stored data from the secured storage device, e.g., the private mailbox, could be synched to the backend, e.g., the key tracking server, whenever the UE can establish a connection to the backend. However, a synchronization is not necessary anytime. Alternatively, a synchronization may be performed triggered by an event, e.g., a deletion of the data from the secured storage device, a request of a third party, e.g., an insurance. For example, in case of an insurance claim, a legal authority investigation and/or the insurance holder may request remote deletion of all digital keys that are registered at the key tracking server (especially supported by vehicle OEM). On deletion, the data stored in the secured storage device indicative of the usage of a digital key on the UE may be transmitted to the backend, e.g., a key tracking server. Thus, the backend can collect the data about a usage of the digital key(s) of the UE.

Therefore by storing the data indicative of the usage of the digital key in the secured storage device there may be no need for a connectivity between communication device and backend, e.g., no communication may be needed to a base station. The communication device can allow the user of the UE to perform certain functionalities of a vehicle without connecting to the backend to inform the backend about this permission. An insurance company may request data about this permission that relates to a current use of the vehicle by the user of the UE, e.g. time of last use, a position of last use, later. This way, in case the vehicle/communication device and the UE is offline, this data can be collected later instead of collecting the data instantaneous through telematics/UE communication link. Thus, there is no need for the communication device or the UE to establish a communication link to a base station. Therefore, a digital key can be used even if no communication link (e.g., an internet link) can be established, e.g., due to insufficient network coverage. This may ensure that data for all digital keys under control of the insurance holder is up to date in the backend, e.g., the key tracking server, at a point in time of an investigation.

Further, a further digital key can be generated by use of the digital key without an established communication link between communication device and backend. Thus, an offline key creation by use of a digital key already registered at the backend, e.g., key tracking server, could be supported by the method 100.

Therefore, method 100 can be used to ensure that the data (usage data) is up to date when needed, e.g., when requested by the backend, and/or to improve the limited digital key generation so that a communication link may be no longer required.

Receiving 110 the data may be performed by receiving the data via near field communication, e.g., excluding a communication link in a mobile communication system. For example, the UE and the communication device may communicate via near field communication technique, Bluetooth low energy, a wireless local area network.

In an example, the usage may be indicative of a generation of another digital key by using the digital key. This way, a digital key can be generated without a required communication link between the communication device or the UE and a backend. For example, it might be beneficial to allow a digital key to be created for a vehicle by another digital key even if there is no communication link, e.g., an internet link. This way, a digital key that is not registered at a backend, e.g., a key tracking server, could be generated and used by the user of the UE. A synchronization or transmission to the backend of the data indicative of the further digital key could be performed later, especially when needed. Thus, a need for establishing a communication link between the communication device, e.g., a vehicle, or UE and backend can be omitted for the time of usage of the digital key.

In an example, the method may further comprise blocking a deletion of at least one of the data or the digital key until the data has been transmitted to a backend. This way, it can be ensured that a third party, e.g., an insurance, may have access to the data anytime needed.

In an example, the method may further comprise transmitting the data in dependence on deleting of at least one of the data or the digital key. Thus, the data can be transmitted to the backend automatically, e.g., if the user has disabled/deleted a digital key. This way, the data in the backend can be kept up to date. Optionally or alternatively, a transmission of the data can be limited to an actually need, e.g., when requested by the backend or if deleted from the UE.

For example, the data stored in the secured storage device may be automatically deleted when the digital key on the UE is deleted. Thus, the data associated with the digital key can be transmitted to the backend triggered by the deletion of the digital key. For example, the user may want to delete a digital key stored on the UE, e.g., the UE is a friend device, and the user has no further access to the vehicle associated with the digital key. Therefore, the user can initiate a deletion of the digital key stored in the secured storage device. By initiating this deletion, the UE can transmit the data associated with the digital key and optionally the digital key to the backend and delete the digital key and optionally the data after the transmission. This way, the key tracking data collection of digital keys can be simplified.

In an example, the method may further comprise receiving a synchronization request from a backend and transmitting the data stored in the storage device to the backend. This way, the backend, e.g., a server of an insurance, can request needed data for a data collection, e.g., in case of a theft of the vehicle.

In an example, the data is encrypted such that the data can only be encrypted by a backend. For example, a symmetrical key for encryption between communication device and backend could be used. This way, a manipulation of the data by a user of the UE can be complicated.

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 4).

Fig. 2 shows an example of a method 200 for a communication device. The method comprises generating data indicative of a usage of a digital key of a user equipment and transmitting the data to the user equipment. The communication device may be a counterpart to the UE as described with reference to Fig. 1. For example, the communication device may receive data indicative of a generation request of a further digital key from the UE. The communication device may generate or certify the further digital key, such that the further digital key can be used for certain functionalities of the vehicle, e.g., to unlock and start the vehicle. Data about this further digital key, e.g., which digital key was used for generation, a time of generation, a position of generation could be stored by use of the data in the secured storage environment of the UE. Thus, no communication link is between the communication device and a backend for synchronization of the data may be needed. This may enable the communication device to perform an offline digital key generation. The communication device may be comprised by a vehicle, an infrastructure, such like a traffic light, a bus stop.

The data may be generated 210 by a processing circuitry of the communication device, e.g., comprised by control unit of a vehicle.

For example, for the offline digital key generation only communication techniques assigned to near field communication may be used between the UE and the communication device. For example, the UE and the communication device may communicate via near field communication technique, Bluetooth low energy, a wireless local area network.

This way, the communication device, e.g., comprised by a vehicle, can transmit data to be stored to the UE and may enable the UE certain functionalities of the communication device and/or vehicle. For example, the communication device may generate a new digital key for usage of a vehicle and may store information about this process in the UE. This way, the UE may act as secured storage device for a later data collection of digital keys of the vehicle.

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 4).

Fig. 3 shows an example of a method 300 for a backend. The method 300 comprises receiving 310, from a user equipment, data indicative of a usage of a digital key. This way, the backend, e.g., a Key Tracking Server, can receive from the UE needed data for a tracking data collection of digital keys. The UE may be the UE as described with reference to Fig. 1.

For example, the UE may communicate in a mobile communication system with the backend, e.g., a server, e.g., a base station. For example, the UE and the backend may communicate in/via a mobile communication system. The mobile communication system may comprise a plurality of transmission points and/or base stations operable to communicate radio signals with the UE. In an example, the mobile communication system may comprise the UE and the communication device.

In general, a UE, e.g., the UE as described above, may be a device that is capable of communicating wirelessly. In particular, however, the UE may be a mobile UE, e.g., a UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the UE and communication device may be configured to communicate in a cellular mobile communication system with the backend. Further, the UE and the communication device may be configured to communicate in a non-cellular communication system. The UE and the communication device may especially use a short-range communication technology.

The mobile communication system may be cellular. The term base station refers to a coverage area of radio services provided by a transmission point, a remote unit, a remote head, a remote radio head, communication device, UE or a NodeB, an eNodeB, respectively. A wireless communication device, e.g., the UE, can be registered or associated with at least one base station (e.g., the backend), e.g., it can be associated to a base station such that data can be exchanged between the network and the mobile in the coverage area of the associated base station using a dedicated channel or connection.

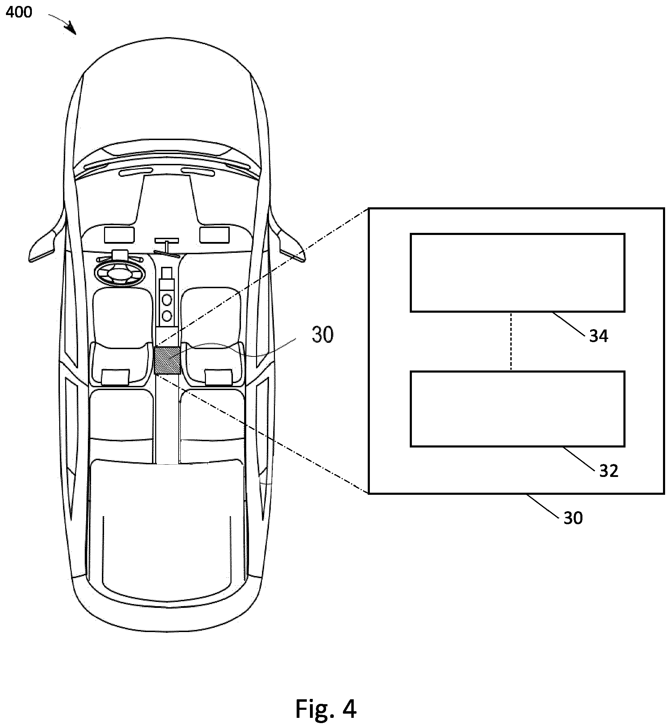

More details and aspects are mentioned in connection with the embodiments described above and/or below. The example shown in Fig. 3 may comprise one or more optional additional features corresponding to one or more aspects mentioned in connection with the proposed concept or one or more examples described above (e.g., Fig. 1-2) and/or below (e.g., Fig. 4).

Fig. 4 shows a block diagram of an example of an apparatus 30 for a vehicle 400. The apparatus comprises interface circuitry configured to communicate with at least one of a communication device, user equipment or backend and processing circuitry configured to perform a method as described above, e.g., the method for UE as described with reference to Fig. 1, the method for a communication device as described with reference to Fig. 2 or the method for a backend, as described with reference to Fig. 3. For example the apparatus may be comprised the vehicle 400, e.g., by a control unit of the vehicle 400. For example, the communication device as described with reference to Fig. 2 and the apparatus 30 may be comprised by the same vehicle 400.

For example, the vehicle 400 may be a land vehicle, such a road vehicle, a car, an automobile, an off-road vehicle, a motor vehicle, a bus, a robo-taxi, a van, a truck or a lorry. Alternatively, the vehicle 400 may be any other type of vehicle, such as a train, a subway train, a boat or a ship. For example, the proposed concept may be applied to public transportation (trains, bus) and future means of mobility (e.g., robo-taxis).

As shown in Fig. 4 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g. any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 4 may comprise one or more optional additional features corresponding to one or more aspects mentioned in connection with the proposed concept or one or more examples described above (e.g., Fig. 1 - 3).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, - processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

### References

30 apparatus
32 processing circuitry
34 interface circuitry
100 method for user equipment
110 receiving data indicative of a usage of a digital key
120 storing the data in a secured storage device
200 method for a communication device
210 generating data indicative of a usage of a digital key
220 transmitting the data to the user equipment
300 method for a backend
310 receiving, from a user equipment, data indicative of a usage of a digital key
400 vehicle

## Claims

1. A method for user equipment (100), comprising:
receiving (110) data indicative of a usage of a digital key from a communication device; and
storing (120) the data in a secured storage device of the user equipment.

2. The method (100) according to claim 1, wherein
the usage is indicative of a generation of another digital key by using the digital key.

3. The method (100) according to any of the preceding claims, further comprising
blocking a deletion of at least one of the data or the digital key until the data has been transmitted to a backend.

4. The method (100) according to claim 3, further comprising
transmitting the data in dependence on deleting at least one of the data or the digital key.

5. The method (100) according to any of the preceding claims, further comprising
receiving a synchronization request from a backend; and
transmitting the data stored in the storage device to the backend.

6. The method (100) according to any of the preceding claims, wherein
the data is encrypted such that the data can only be decrypted by a backend.

7. A method (200) for a communication device, comprising:
generating (210) data indicative of a usage of a digital key of a user equipment; and
transmitting (220) the data to the user equipment.

8. A method (300) for a backend, comprising
receiving (310), from a user equipment, data indicative of a usage of a digital key.

9. An apparatus (30), comprising:
interface circuitry configured to communicate with at least one of a communication device,
user equipment or backend; and
processing circuitry configured to perform a method according to any of the preceding claims.

10. A computer program having a program code for performing the method (100; 200; 300) according to claim 1 - 8, when the computer program is executed on a computer, a processor, or a programmable hardware component.
